# EUROPEAN PATENT APPLICATION

(11) **EP 1 737 164 A1**
(43) Date of publication of application: **27.12.2006**
(21) Application number: 05818805.3
(22) Date of filing: 13.12.2005
(51) Int. Cl.: H04L 12/28, H04L 12/56

(54) **A METHOD FOR REALIZING MULTICASTING IN A VIRTUAL PRIVATE NETWORK USING A VIRTUAL ROUTER**

(30) Priority: 14.12.2004 CN 04908715
(71) Applicant: Huawei Technologies Co., Ltd., Longgang District, Shenzhen Guangdong 518129 (CN)
(72) Inventor: LIU, Enhui, Shenzhen, Guangdong 518129 (CN); ZHOU, Chunyue, Shenzhen, Guangdong 518129 (CN); ZHANG, Yue, Shenzhen, Guangdong 518129 (CN); ZHANG, Hongke, Shenzhen, Guangdong 518129 (CN)
(74) Representative: Thun, Clemens
(86) International application number: PCT/CN2005/002168
(87) International publication number: WO 2006/063513

(57) **Abstract**

A method for implementing multicast in a Virtual Router-based Virtual Private Network (VR-VPN), including: establishing a local multicast tree in each VPN site and a Service Provider (SP) multicast tree connecting each VPN site; setting a Proxy Source/ Rendezvous Point (RP) for a multicast source on each VR; the multicast source transmitting multicast data to the Proxy Source/RP on an ingress VR, the Proxy Source/RP forwarding the multicast data to a local receiver along the local multicast tree, and transmitting the multicast data to an egress VR along the SP multicast tree after encapsulating the multicast data; the egress VR de-encapsulating the multicast data and discarding the multicast data or forwarding the multicast data to the local site according to local state. The present invention may improve the transmission efficiency, and reduces multicast on backbone routers, thereby improving the scalability of the network.

## Description

### Field of the Technology

The present invention relates to Virtual Private Network (VPN) technologies, more particularly to a method for implementing multicast in a Virtual Router-based VPN (VR-VPN).

### Background of the Invention

VPN is a network providing virtual private services for users through tunnels, encryptions and other techniques. Nowadays there are mainly two kinds of layer 3 VPN architectures based on Provider Edge (PE), which are VR-VPN and lifting VPN. In the VR-VPN, each VR in the VPN domain runs routing protocols, and distributes the VPN's routing reachability information between the VRs. The VRs belonging to the same VPN domain must have the same VPN identifier.

At present, unicast in the VR-VPN is already realized. During the process of the unicast in the VR-VPN, neighbor discovery is implemented among the VRs firstly, therefore each VR can obtain the VPN's routing reachability information, i.e., each VR can learn the PEs where other VRs are located. Then a transmitter transmits data to a receiver according to the VPN's routing reachability information.

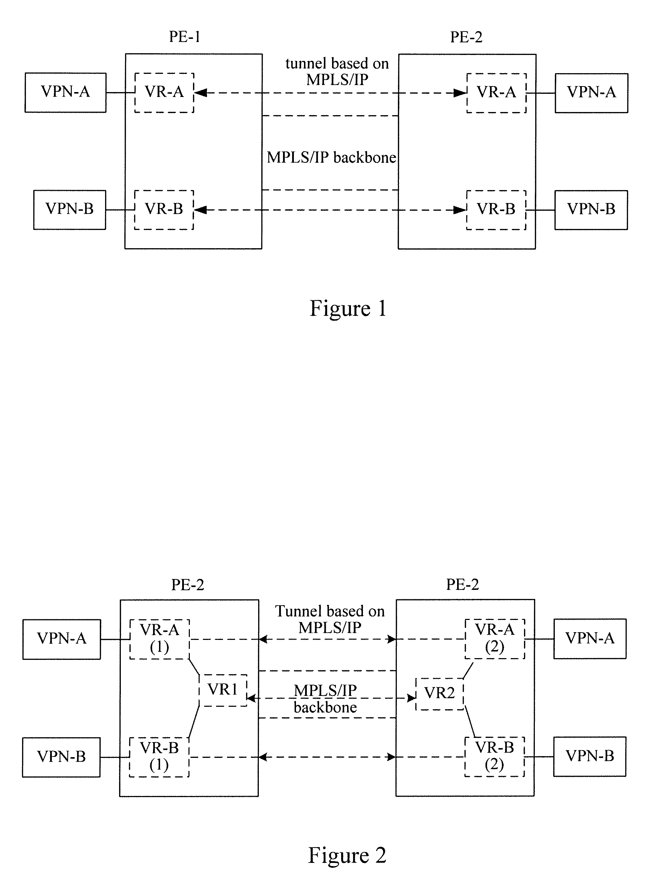

There are two typical implementations for the unicast in the VR-VPN. In the first implementation, common VRs in the VPN directly exchange the routing reachability information with each other. Figure 1 is a schematic diagram illustrating a network which is directly connected by common VRs according to the prior art.

In the second implementation, several common VRs of the same PE are connected to a backbone VR, and then connected to the backbone through the backbone VR. Since the backbone VR permits VR convergence in the VPN, when any new VPN site joins, the configuration of the backbone remains unchanged. The backbone VR exchanges routing information with other backbone entities. Figure 2 is a schematic diagram illustrating a network which is connected by backbone VRs according to the prior art. Wherein, VR 1 and VR 2 are counterparts, they respectively converges VPN-A and VPN-B.

Nowadays, only unicast is implemented in the VR-VPN. However, in practical applications, data in the VPN are also transmitted by multicast. In multicast, Point-to-Multipoint (P2MP) network connections are implemented between a transmitter and receivers. If a transmitter simultaneously transmits the same data to multiple receivers, the data packets only need to be copied at branch nodes. In other words, multicast can improve transmission efficiencies and reduce backbone congestion. Since it is impossible to implement multicast in the VR-VPN at present, the VR-VPN cannot share the advantages of multicast, accordingly, the transmission efficiency is decreased, and backbone congestion is more likely to happen.

### Summary of the Invention

The present invention provides a method for implementing multicast in a Virtual Router-based Virtual Private Network (VR-VPN), so as to bear multicast services in the VR-VPN, and implement high-efficiency multicast data transmission in sites and backbones.

The technical solution of the present invention is implemented as follows:

A method for implementing multicast in VR-VPN includes:
running an inner-site multicast routing protocol instance towards user sides on each Virtual Router (VR) to establish a local multicast tree of each VPN site; if a backbone supports a multicast routing protocol, running a Service Provider (SP) multicast routing protocol instance towards the backbone on the VRs to establish an SP multicast tree which connects each VPN site; and setting a Proxy Source/Rendezvous Point (RP) for a multicast source on each VR;
the multicast source transmits multicast data to the Proxy Source/RP on an ingress VR, the Proxy Source/RP on the ingress VR forwards the multicast data to a local receiver along the local multicast tree, and transmits the multicast data to an egress VR along the SP multicast tree after encapsulating the multicast data;
the egress VR de-encapsulates the multicast data after receiving the data, and discards the multicast data or forwards the multicast data to the local site according to local state of the egress VR.

Wherein, there is no backbone VR which converges multiple common VRs on a Provider Edge (PE) in the VPN; and
the step of running an SP multicast routing protocol instance towards the backbone includes: running an SP multicast routing protocol instance on the common VRs;
the egress VR is an egress common VR.

The step of establishing an SP multicast tree which connects each VPN site includes: the VRs establish a shared tree directly towards the SP;
the step of the Proxy Source/RP on the ingress VR transmitting the multicast data to the egress VR along the SP multicast tree after encapsulating the multicast data includes: the ingress VR, acting as the Proxy Source, encapsulates the multicast data and transmits the multicast data to the RP configured on the SP, and the RP transmits the multicast data to the egress common VR along the shared tree.

The step of the VRs establishing a shared tree directly towards the SP includes:
configuring a global group address for all the VRs in the VPN;
selecting an RP for the global group address in the SP network;
all the VRs in the VPN construct a shared tree taking the RP as a root by multicast routing protocol behaviors.

The step of establishing an SP multicast tree which connects each VPN site includes: establishing a source tree in the SP directly towards the SP;
the step of the Proxy source/RP on the ingress VR encapsulating the multicast data and transmitting the data to the egress VR along the SP multicast tree includes: the ingress VR, acting as the Proxy source/RP, encapsulates the multicast data and transmits the data to the egress common VR along the SP source tree.

The step of the VRs establishing a source tree in the SP directly towards the SP includes:
configuring a global group address for the source VR in the VPN;
all the VRs in the VPN construct the source tree taking the source VR as a root by multicast routing protocol behaviors.

There is a backbone VR, at which multiple common VRs are converged, on the PE in the VPN;
the step of running the SP multicast routing protocol instance on the VR towards the backbone includes: running the SP multicast routing protocol instance on the backbone VR;
the egress VR is an egress backbone VR.

The step of establishing an SP multicast tree which connects each VPN site includes: the common VRs are converged to the backbone VR, and the backbone VR establishes a shared tree towards the SP;
the step of the Proxy Source/RP on the ingress VR transmitting the multicast data to the egress VR along the SP multicast tree after encapsulating the multicast data includes: the ingress VR, acting as the Proxy Source, transmits the multicast data to the ingress backbone VR, and the ingress backbone VR forwards the multicast data to the egress backbone VR along the established shared tree after encapsulating the multicast data;

The step of the egress VR de-encapsulating the multicast data and discarding the multicast data or forwarding the multicast data to the local site according to local states of the egress VR includes:
the backbone egress VR de-encapsulate the multicast data after receiving the multicast data;
the egress backbone VR determines whether the multicast data point to the local common VR according to a locally stored list, if the multicast data does not point to the local common VR, discarding the multicast data;
otherwirse, the egress backbone VR transmits the multicast data to the local common VR, the local common VR determines whether there is a local receiver, if there is, forward the multicast data to the local receiver, and end the current procedure; otherwise, discard the multicast data;

The step of the common VRs being converged to the backbone VR and the backbone VR establishing a shared tree towards the SP includes:
configuring a same global group address for all the backbone VRs in the VPN;
selecting an RP in the SP network;
all the backbone VRs in the VPN construct a shared tree taking the RP as a root and the global group address as a group address by multicast routing protocol behaviors.

When the backbone does not support the multicast routing protocol, the method further includes:
any VR collects multicast receiving requirement information of its local site, and transmits the multicast receiving requirement information to the VRs in other sites through the backbone after encapsulating the multicast receiving requirement information;
any VR which receives the multicast receiving requirement information de-encapsulates the multicast receiving requirement information, obtains and stores the multicast receiving requirement information of other VRs in a group state table;
when a multicast source transmits multicast data, the ingress VR determines an egress VR which has multicast requirement according to the multicast receiving requirement information of other VRs stored in the group state table;
the ingress VR encapsulates the multicast data in a unicast tunnel, and transmits the data to the determined egress VR which has the multicast requirement through the backbone;
the egress VR forwards the received multicast data to a multicast receiver in its local site.
the step of encapsulating the multicast receiving requirement information includes: the VR encapsulates the multicast receiving requirement information into a Border Gateway Protocol (BGP) message, or a Protocol Independent Multicast (PIM) message, or an Internet Group Management Protocol (IGMP) message.

The unicast tunnel is in a Generic Routing Encapsulation (GRE) mode, or a Multi-Protocol Label Switching (MPLS) mode, or a Layer 2 Tunneling Protocol (L2TP) mode.

It can be seen from the above-mentioned technical solutions that, the present invention implements a multicast method in the VR-VPN, which improves the transmission efficiency, and reduces multicast on backbone routers, thereby improving the scalability of the network. Moreover, by configuring the VR as the Proxy Source/ Rendezvous Point, the present invention implements a full control on the multicast states and the transmission path optimization in each VPN site. In addition, the present invention provides different solutions for establishing the multicast tree for different VR configurations in the SP network, which dramatically improves the flexibility of the present invention.

### Brief Description of the Drawings

Figure 1 is a schematic diagram illustrating a network which is directly connected by common VRs according to the prior art.
Figure 2 is a schematic diagram illustrating a network which is connected by backbone VRs according to the prior art.
Figure 3 is a flow chart illustrating a procedure of implementing multicast in a VR-VPN when the backbone supports the multicast routing protocol according to an embodiment of the present invention.
Figure 4 is a schematic diagram illustrating a network in which the first means for establishing a shared tree is adopted according to an embodiment of the present invention.
Figure 5 is a flow chart illustrating a procedure of establishing the shared tree and implementing multicast data packet forwarding based on the network shown in Figure 4 according to an embodiment of the present invention.
Figure 6 is a schematic diagram illustrating a network in which the second means for establishing the source tree is adopted according to an embodiment of the present invention.
Figure 7 is a flow chart illustrating a procedure of establishing the source tree and implementing multicast data packet forwarding based on the network shown in Figure 6 according to an embodiment of the present invention.
Figure 8 is a schematic diagram illustrating a network in which the third means for establishing the source tree by backbone VRs towards the SP is adopted according to an embodiment of the present invention.
Figure 9 is a flow chart illustrating a procedure of the backbone VR establishing the shared tree towards the SP and implementing multicast data packet forwarding based on the network shown in Figure 8 according to an embodiment of the present invention.
Figure 10 is a flow chart illustrating a procedure of implementing multicast data forwarding when the backbone does not support the multicast routing protocol according to an embodiment of the present invention.

### Detailed Description of the Invention

In order to make the technical solutions and the advantages of the present invention clearer, the present invention will be described in detail hereinafter with reference to embodiments and accompanying drawings.

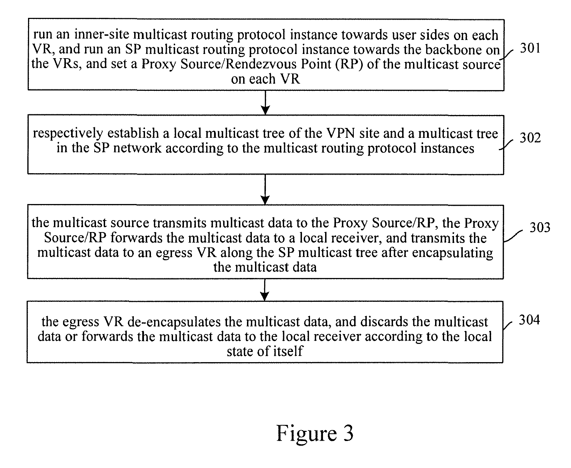

Figure 3 is a flow chart illustrating a procedure of implementing multicast in a VR-VPN when the backbone supports the multicast routing protocol according to an embodiment of the present invention. As shown in Figure 3, when the backbone supports the multicast routing protocol, the procedure of implementing multicast in the VR-VPN according to an embodiment of the present invention includes:
Step 301: run an inner-site multicast routing protocol instance towards user sides on each VR, and run an SP multicast routing protocol instance towards the backbone on the VRs, and setting a Proxy Source/ RP of the multicast source on each VR.
wherein, the multicast routing protocol is one mode of the PIM protocol, such as PIM-Dense Mode (PIM-DM), PIM-Sparse Mode (PIM-SM), Bidirectional PIM (PIM BiDir) or Source Specific Multicast (PIM-SSM).

In addition, a PIM neighbor relationship exists between each VR and a Customer Edge (CE) which is connected with the VR. But there are no neighbor relationships between the CEs or between the VRs in the same PE. Each VR, which is connected with a VPN, is prescribed as the Proxy Source/RP of specific multicast groups in the VPN site, and the Proxy Source/RP is connected to the source in the VPN site directly or through the CE Router. From the point of view of the SP network, the Proxy Source/RP represents all the multicast sources in the VPN site. From the point of view of the VPN site, the Proxy Source/RP is the RP of all the multicast trees in the VPN site, and all the route state information ((C-Source, C-Group), (*,C-Group)) will be converged to the RP through a local JOIN/PRUNE message.

Then the VRs connected to the VPN site inform the backbone VRs in the local PE of all the route state information which will be stored by the backbone VRs. The local addresses of all the multicast state information are not required to be globally unique, they can be differentiated by just adding pre-assigned VPN Identifiers (VPN-IDs). The differentiated route state information are recorded as (*, G, VPN-ID) or (S, G, VPN-ID).

Step 302: establish a local multicast tree of the VPN site and a multicast tree in the SP network according to the multicast routing protocol instances.

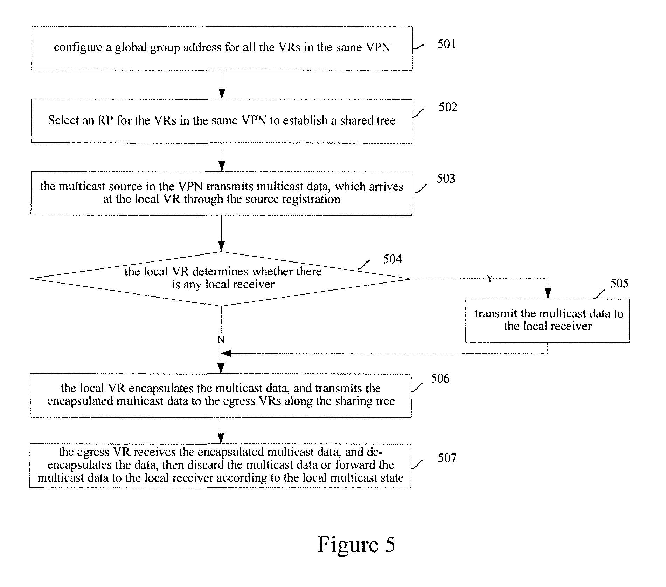

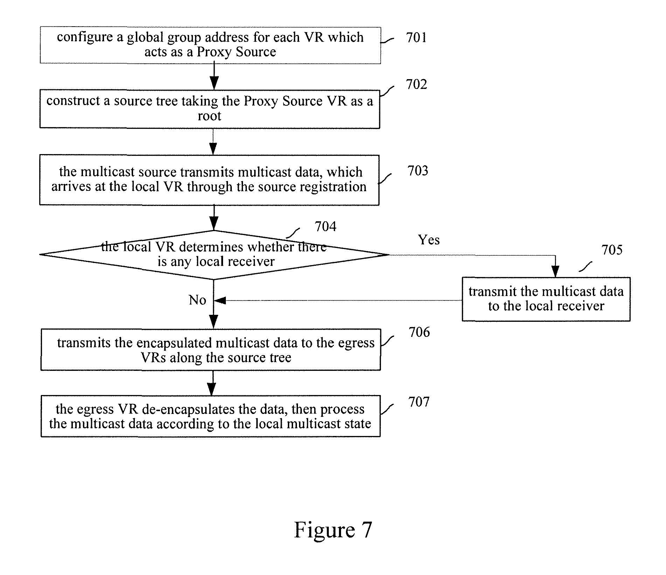

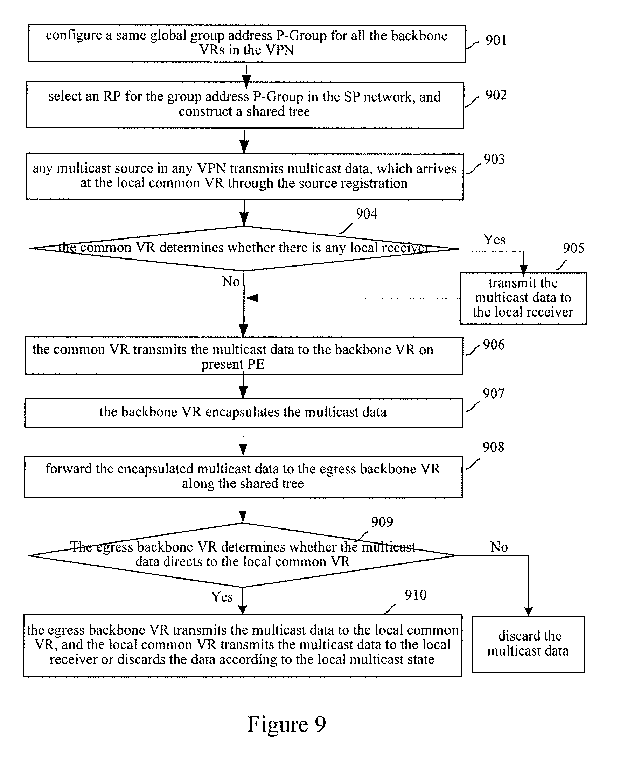

The embodiment of present invention includes three means for establishing the multicast tree in the SP network, including: the first, establishing a shared tree in the SP directly towards the SP as shown in Figure 5; the second, establishing a source tree in the SP directly towards the SP as shown in Figure 7; the third, converging the common VRs to the backbone VR and the backbone VR establishing the shared tree towards the SP as shown in Figure 9. Wherein, the precondition of the first and the second means is: no backbone VR, to which multiple common VRs are converged, is set on the PE in the VPN, i.e., the egress VR of the VPN is an egress common VR. The precondition of the third is: a backbone VR, to which multiple common VRs are converged, is set on the PE in the VPN, i.e., the egress VR of the VPN is an egress backbone VR.

Step 303: the multicast source transmits multicast data to the Proxy Source/RP, the Proxy Source/RP forwards the multicast data to a local receiver, and transmits the multicast data to an egress VR along the SP multicast tree after encapsulating the multicast data;

When any source in any VPN site transmits multicast data, the data arrives at the local VR through a source registration. Then the local VR determines whether there is any local receiver according to the local multicast state of itself, if there is, transmit the multicast data to the local receiver, meanwhile, encapsulate the data and transmit the data to the egress VR along the multicast tree of the SP network.

Step 304: the egress VR de-encapsulates the multicast data, and discards the multicast data or forwards the multicast data to the local receiver according to the local state of itself.

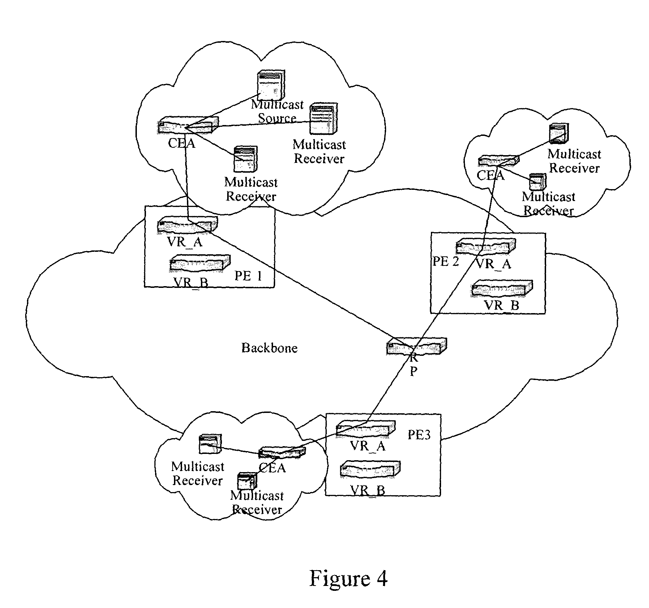

Figure 4 is a schematic diagram illustrating a network in which the first means for establishing a shared tree is adopted according to an embodiment of the present invention. Figure 5 is a flow chart illustrating a procedure of establishing the shared tree and implementing multicast data packet forwarding based on the network shown in Figure 4 according to an embodiment of the present invention. Referring to Figure 4 and Figure 5, the procedure of establishing the multicast tree and forwarding the data packets according to the embodiment of the present invention includes the following steps:
Step 501: configure a global group address for all the VRs in the same VPN.

As shown in Figure 4, wherein, a global group address P-Group A is configured for three VR_As in PE1, PE2 and PE3.

Step 502: select an RP for the global group address P-Group A in the SP network, and all the VRs in the VPN construct a shared tree taking the selected RP as a root by multicast routing protocol behaviors.

Referring to Figure 4, in this step, the shared tree is established for the VR_As in the PE1, PE2 and PE3.

The first means of the VR establishing a shared tree in the SP directly towards the SP is implemented through the step 501 to step 502.

Step 503: the multicast source in the VPN transmits multicast data, which arrives at the local VR through the source registration.

Wherein, referring to Figure 4, the local VR is the VR_A in the PE1, and the source in the source registration mentioned here and hereinafter refers to CE A.

Wherein, the detailed implementation of this step is: the multicast source transmits the multicast data to the Proxy Source/RP on the ingress VR, and the Proxy Source/RP on the ingress VR forwards the multicast data to the local receiver, i.e. the local VR, along the established local multicast tree.

Step 504: the local VR, i.e. the VR_A in the PE1, receives the data from the multicast source, and determines whether there is any local receiver according to the multicast state stored in the local VR itself, if there is, execute step 505; otherwise, directly execute step 506.

Step 505: transmit the multicast data to the local receiver.

Step 506: the local VR, i.e. the VR_A in the PE1, encapsulates the multicast data in the GRE or the IP manner, and transmits the encapsulated multicast data to the egress VRs, i.e. the VR_A in the PE2 and the VR_A in the PE3, along the shared tree.

Wherein, the source address of the encapsulation is the address of the VR which performs the encapsulation, i.e. the address of the VR_A in the PE1; the destination address of the encapsulation is the global group address of the local VPN, i.e. the P-GroupA.

Step 507: the egress VRs, i.e. the VR_A in the PE2 and the VR_A in the PE3, receive the encapsulated multicast data, and de-encapsulate the data, then discard the multicast data or forward the multicast data to the local receiver according to the local multicast states.

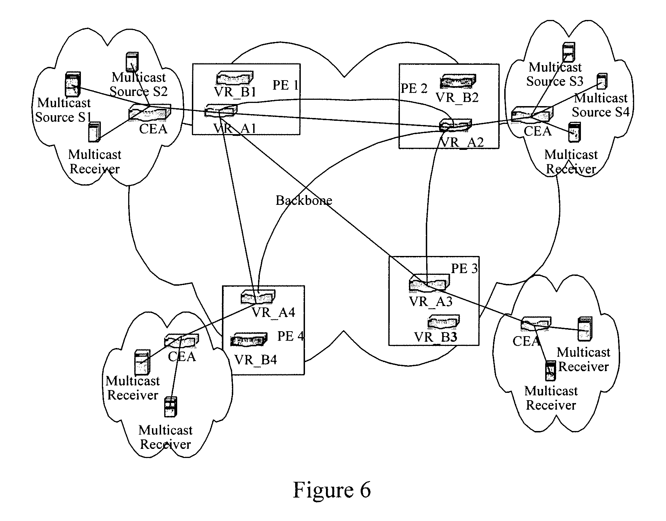

Figure 6 is a schematic diagram illustrating a network in which the second means for establishing the source tree is adopted according to an embodiment of the present invention. Figure 7 is a flow chart illustrating a procedure of establishing the source tree and implementing multicast data packet forwarding based on the network shown in Figure 6 according to an embodiment of the present invention. Referring to Figure 6 and Figure 7, the detailed procedure of establishing the multicast tree and forwarding the data packets includes the following steps:
Step 701: configure a global group address for each VR which acts as a Proxy Source.

Wherein, referring to Figure 6, in the present embodiment, a group address P-GroupA1 is configured for the VR_A1 in the PE1, and a group address P-GroupA2 is configured for the VR_A2 in the PE2.

Step 702: all the VRs in the VPN construct a source tree taking the Proxy Source VR as a root by multicast routing protocol behaviors.

Wherein, referring to Figure 6, since the VR_A1 in the PE1 is connected with multicast sources S1 and S2, a source tree (VR_A1, P-GroupA1) is constructed, in which the VR_A1 in the PE1 is the root and the VR_A2 in the PE2, the VR_A3 in the PE3 and the VR_A4 in the PE4 as leaf nodes. Since the VR_A2 in the PE2 is connected with a multicast source S3, a source tree (VRA2, P-GroupA2) is constructed, in which the VR_A2 in the PE2 is the root and the VR_A1, VR_A3 and VR_A4 as leaf nodes.

Thus, the second means of the VR establishing the source tree in the SP directly towards the SP according to the embodiment of the present invention is implemented.

Step 703: the multicast sources S 1 and S2 in the VPN transmit multicast data which arrives at the local VR through the source registration.

Wherein, the local VR is the VR_A1 in the PE1.

Wherein, the detailed implementation of this step is: the multicast sources transmit the multicast data to the Proxy Source/RP on ingress VR, and the Proxy Source/RP on the ingress VR forwards the multicast data to the local receiver, i.e. the local VR, along the established local multicast tree.

Step 704: the local VR, i.e. the VR_A1 in the PE1, receives the data from the multicast sources, and determines whether there is any local receiver according to the multicast state stored by the local VR itself, if there is, execute step 705; otherwise, directly execute step 706.

Step 705: transmit the multicast data to the local receiver along the multicast tree in the site.

Step 706: the VR_A1 in the PE1 encapsulates the multicast data in the GRE or the IP manner, and transmits the encapsulated multicast data to the egress VRs, i.e. the VR_A2 in the PE2 and the VR_A3 in the PE3, along the source tree.

Wherein, the source address of the encapsulation is the address of the VR which performs the encapsulation, i.e. the address of the VR_A1 in the PE 1; the destination address of the encapsulation is the P-GroupA1.

Step 707: the egress VRs, i.e. the VR_A2 in the PE2 and the VR_A3 in the PE3, receive the encapsulated multicast data, and de-encapsulate the data, then discard the multicast data or forward the multicast data to the local receiver according to the local multicast state.

If there exist backbone VRs and interactions between the backbone VRs, an SP shared tree can be established among the backbone VRs. At this time, the backbone VR performs a GRE encapsulation to the multicast data, taking the address of the backbone VR as the source address, the group address P-Group of the SP network as the destination address, and the VPN-ID of the VPN where the packet comes from as a keyword. The multicast data is transmitted along the multicast tree and is forwarded to each backbone VR. The backbone VRs are responsible for de-encapsulating, extracting the VPN-ID and recovering the data packets, and determine whether to discard the multicast data according to the (*, G, VPN-ID) list stored by itself. The multicast data which is not discarded will be transmitted to the corresponding VR according to the VPN-ID of the multicast data. And the VR further processes the multicast data according to a local multicast forwarding table till the data arrives at the receiver.

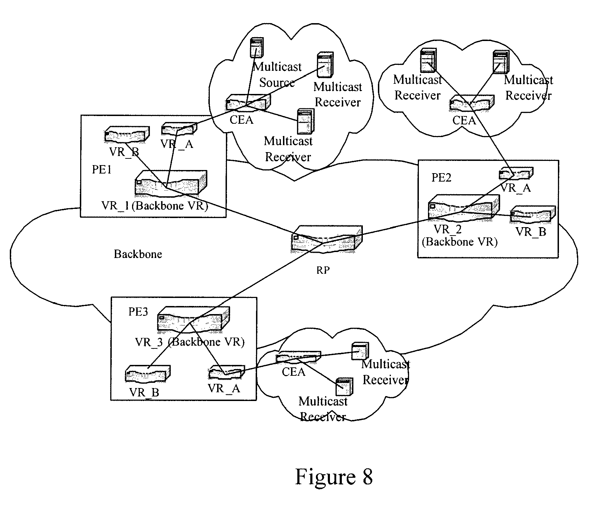

Figure 8 is a schematic diagram illustrating a network in which the third means for establishing a shared tree by the backbone VRs towards the SP is adopted according to an embodiment of the present invention. Figure 9 is a flow chart illustrating a procedure of the backbone VR establishing the shared tree towards the SP and implementing multicast data packet forwarding based on the network shown in Figure 8 according to an embodiment of the present invention. Referring to Figure 8 and Figure 9, the detailed procedure of establishing the multicast tree and forwarding the data packets includes the following steps:
Step 901: configure a same global group address P-Group for all the backbone VRs in the VPN.
Step 902: select an RP for the group address P-Group in the SP network, and construct a shared tree taking all the backbone VRs in the VPN as leaf nodes and the P-Group as the group address by multicast routing protocol behaviors. Wherein, the RP is taken as the root and the global group address as the group address.

Thus, the third means of establishing the shared tree is implemented, in which the common VRs are converged to the backbone VRs, and the shared tree is established by the backbone VRs towards the SP.

Step 903: any multicast source in any VPN transmits multicast data which arrives at the local common VR through the source registration.

Wherein, the detailed implementation of this step is: the multicast source transmits the multicast data to the Proxy Source/RP on ingress VR, and the Proxy Source/RP on the ingress VR forwards the multicast data to the local receiver, i.e. the local common VR, along the established local multicast tree.

Step 904: the common VR determines whether there is any local receiver according to the multicast state stored by the common VR, if there is, execute step 905; otherwise, directly execute step 906.

Step 905: transmit the multicast data to the local receiver.

Step 906: the common VR transmits the multicast data to the backbone VR on the current PE through unicast tunnel.

Step 907: the backbone VR performs the GRE encapsulation to the multicast data, with the address of the backbone VR as the source address, the group address P-Group of the SP network as the destination address and the VPN-ID of the multicast source as the keyword.

Step 908: forward the encapsulated multicast data to the egress backbone VR along the shared tree.

Step 909: after the egress backbone VR receives the multicast data, it de-encapsulates the multicast data, and determines whether the multicast data directs to the local common VR according to the locally stored list, if so, execute step 910; otherwise, discard the multicast data.

Step 910: the egress backbone VR transmits the multicast data to the local common VR, and the local common VR transmits the multicast data to the local receiver or discards the data according to the local multicast state.

Determine according to the local multicast states whether the local receiver exists, if the local receiver exists, transmit the multicast data to the local receiver; otherwise, discard the data.

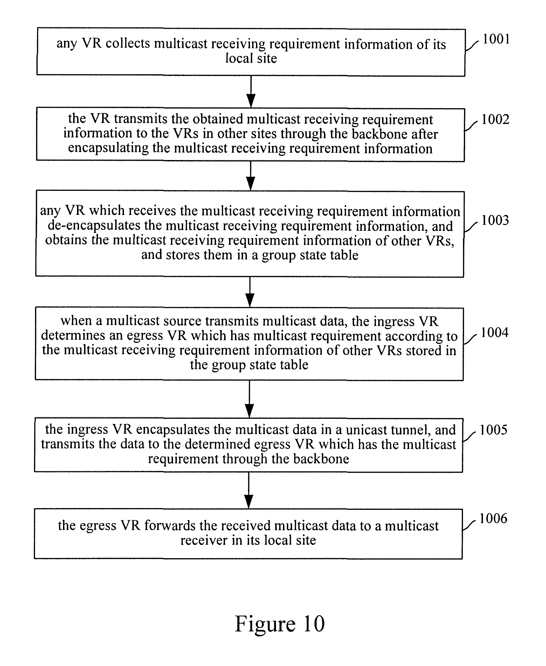

Figure 10 is a flow chart illustrating a procedure of implementing multicast data forwarding when the backbone does not support the multicast routing protocol according to an embodiment of the present invention. Referring to Figure 10, when the backbone does not support the multicast routing protocol, unicast tunnel transmission and group control methods can be adopted in the present invention to implement the multicast data forwarding. The procedure includes the following steps:
Step 1001: any VR collects multicast receiving requirement information of its local site, i.e., the requirement information for any group or any source specific group.
Step 1002: the VR transmits the obtained multicast receiving requirement information to the VRs in other sites through the backbone after encapsulating the multicast receiving requirement information;

Wherein, the VR can encapsulate the multicast receiving requirement information into a BGP message, or a PIM message, or an IGMP message.

In addition, the multicast receiving requirement information comprises an identifier of the present VR and the group address of the required group. When the required group is a source specific group, the multicast receiving requirement information further includes the address information of the source. When the required group is any group, the VR transmits the multicast receiving requirement information to all the other VRs. When the required group is the source specific group, the VR only transmits the multicast receiving requirement information to the VR where the source locates.

Step 1003: any VR which receives the multicast receiving requirement information de-encapsulates the multicast receiving requirement information, and obtains the multicast receiving requirement information of other VRs, and stores them in a group state table.

Step 1004: when a multicast source transmits multicast data, the ingress VR determines an egress VR which has multicast requirement according to the multicast receiving requirement information of other VRs stored in the group state table.

Step 1005: the ingress VR encapsulates the multicast data in a unicast tunnel, and transmits the data to the determined egress VR which has the multicast requirement through the backbone.

Wherein, the unicast tunnel can be in the GRE mode, or the MPLS mode, or the L2TP mode.

Step 1006: the egress VR forwards the received multicast data to a multicast receiver in its local site.

In the above-mentioned procedures, the first means, the second means and the third means for establishing the multicast tree in the SP network can adopt an MPLS Point-to-Multipoint Label Switching Path (P2MP LSP) mechanism. Under such circumstances, the P router in the SP network is not required to support the multicast routing protocol, but it must support the MPLS and the extended Resource Reservation Protocol (RSVP). At this time, after a VR or a backbone VR discovers its counterparts, each VR or each backbone VR initiates to establish a P2MP tree, with the initiating VR as the source and other VRs or backbone VRs as leaf nodes. As to the tree which has the common VR as the root or as the leaf node, the data transmitted in the SP network needs one MPLS encapsulation. Wherein, the allocation of labels and forwarding database in each node are determined by the extended RSVP (for P2MP). As to the tree which has the backbone VR as the root or as the leaf node, the local multicast data will be encapsulated by the backbone VR using two MPLS labels. Wherein, a stack-bottom label is used for identifying the VPN-ID, and a stack-top label is used for label switching on the P2MP path.

The above-mentioned embodiments are only the preferred embodiments of the present invention, which are not used to confine the protection scope of the present invention. Any changes, substitution of equivalent parts or improvements made without departing from the spirit of the present invention should be covered in the scope of the present invention.

## Claims

1. A method for implementing multicast in a Virtual Router-based Virtual Private Network (VR-VPN), comprising:
running an inner-site multicast routing protocol instance towards user sides on each Virtual Router (VR), and establishing a local multicast tree of each VPN site; if a backbone supports a multicast routing protocol, running a Service Provider (SP) multicast routing protocol instance towards the backbone on the VRs, establishing an SP multicast tree which connects each VPN site; and setting a Proxy Source/Rendezvous Point (RP) for a multicast source on each VR;
the multicast source transmitting multicast data to the Proxy Source/RP on an ingress VR; the Proxy Source/RP on the ingress VR forwarding the multicast data to a local receiver along the local multicast tree and transmitting the multicast data to an egress VR along the SP multicast tree after encapsulating the multicast data;
the egress VR de-encapsulating the multicast data after receiving the data, and discarding the multicast data or forwarding the multicast data to the local site according to local state of the egress VR.

2. The method according to Claim 1, wherein, there is no backbone VR which converges multiple common VRs on a Provider Edge (PE) in the VPN; and
the step of running SP multicast routing protocol instance towards the backbone comprises: running the SP multicast routing protocol instance on the common VRs;
the egress VR is an egress common VR.

3. The method according to Claim 2, wherein, the step of establishing an SP multicast tree which connects each VPN site comprises: the VRs establishing a shared tree in the SP directly towards the SP;
the step of the Proxy Source/RP on the ingress VR transmitting the multicast data to the egress VR along the SP multicast tree after encapsulating the multicast data comprises: the ingress VR, acting as the Proxy Source, encapsulating the multicast data and transmitting the multicast data to the RP configured on the SP, and the RP transmitting the multicast data to the egress common VR along the shared tree.

4. The method according to Claim 3, wherein, the step of the VR establishing a shared tree in the SP directly towards the SP comprises:
configuring a global group address for all the VRs in the VPN;
selecting an RP for the global group address in the SP network;
all the VRs in the VPN constructing a shared tree taking the RP as a root by multicast routing protocol behaviors.

5. The method according to Claim 2, wherein, the step of establishing an SP multicast tree which connects each VPN site comprises: establishing a source tree in the SP directly towards the SP;
the step of the Proxy source/RP on the ingress VR transmitting the data to the egress VR along the SP multicast tree after encapsulating the multicast data comprises: the ingress VR, acting as the Proxy source/RP, encapsulating the multicast data and transmitting the data to the egress common VR along the SP source tree.

6. The method according to Claim 5, wherein, the step of the VRs establishing a source tree in the SP directly towards the SP comprises:
configuring a global group address for the source VR in the VPN;
all the VRs in the VPN constructing the source tree taking the source VR as a root by multicast routing protocol behaviors.

7. The method according to Claim 1, wherein, there is a backbone VR, at which multiple common VRs are converged, on the PE in the VPN;
the step of running the SP multicast routing protocol instance on the VR towards the backbone comprises: running the SP multicast routing protocol instance on the backbone VR;
the egress VR is an egress backbone VR.

8. The method according to Claim 7, wherein, the step of establishing an SP multicast tree which connects each VPN site comprises: the common VRs being converged to the backbone VR, and the backbone VR establishing a shared tree towards the SP;
the step of the Proxy Source/RP on the ingress VR transmitting the multicast data to the egress VR along the SP multicast tree after encapsulating the multicast data comprises: the ingress VR, acting as the Proxy Source, transmitting the multicast data to the ingress backbone VR, and the ingress backbone VR forwarding the multicast data to an egress backbone VR along the established shared tree after encapsulating the multicast data;
the step of the egress VR de-encapsulating the multicast data and discarding the multicast data or forwards the multicast data to the local site according to local states of the egress VR comprises:
the backbone egress VR de-encapsulating the multicast data after receiving the multicast data;
the egress backbone VR determining whether the multicast data point to the local common VR according to a locally stored list, if the multicast data does not point to the local common VR, discarding the multicast data;
otherwise, the egress backbone VR transmitting the multicast data to the local common VR, and the local common VR determining whether there is a local receiver, if there is, forwarding the multicast data to the local receiver; otherwise, discarding the multicast data;

9. The method according to Claim 8, wherein, the step of the common VRs being converged to the backbone VR and the backbone VR establishing a shared tree towards the SP comprises:
configuring a same global group address for all the backbone VRs in the VPN;
selecting an RP in the SP network;
all the backbone VRs in the VPN constructing the shared tree taking the RP as a root and the global group address as a group address by multicast routing protocol behaviors.

10. A method for implementing multicast in a Virtual Router-based Virtual Private Network (VR-VPN), comprising:
running an inner-site multicast routing protocol instance towards user sides on each Virtual Router (VR), establishing a local multicast tree of each VPN site, and setting a Proxy Source/Rendezvous Point (RP) for a multicast source on each VR;
the multicast source transmitting multicast data to the Proxy Source/RP on an ingress VR, the Proxy Source/RP on the ingress VR forwarding the multicast data to a local receiver along the established local multicast tree;
when a backbone supports the multicast routing protocol, running a Service Provider (SP) multicast routing protocol instance towards the backbone on the VRs, and establishing an SP multicast tree which connects each VPN site; when the Proxy Source/RP on the ingress VR receives the multicast data, it encapsulating the multicast data and transmitting the data to the egress VR along the established SP multicast tree; the egress VR de-encapsulating the multicast data after receiving the data, and discarding the multicast data or forwarding the multicast data to a local site according to local states of the egress VR.
when the backbone does not support the multicast routing protocol, any VR collecting multicast receiving requirement information of its local site, and transmitting the multicast receiving requirement information to the VRs in other sites through the backbone after encapsulating the multicast receiving requirement information;
any VR which receives the multicast receiving requirement information de-encapsulating the multicast receiving requirement information, obtaining and storing the multicast receiving requirement information of other VRs in a group state table;
when a multicast source transmits multicast data, the ingress VR determining an egress VR which has multicast requirement according to the multicast receiving requirement information of other VRs stored in the group state table;
the ingress VR encapsulating the multicast data in a unicast tunnel, and transmitting the data to the determined egress VR which has the multicast requirement through the backbone;
the egress VR forwarding the received multicast data to a multicast receiver in its local site.

11. The method according to Claim 10, wherein, the step of encapsulating the multicast receiving requirement information comprises: the VR encapsulating the multicast receiving requirement information into a Border Gateway Protocol (BGP) message, or a Protocol Independent Multicast (PIM) message, or an Internet Group Management Protocol (IGMP) message.

12. The method according to Claim 10, wherein, the unicast tunnel is in a Generic Routing Encapsulation (GRE) mode, or a Multi-Protocol Label Switching (MPLS) mode, or a Layer 2 Tunneling Protocol (L2TP) mode.
